# EUROPEAN PATENT APPLICATION

(11) **EP 3 282 608 A1**
(43) Date of publication of application: **14.02.2018**
(21) Application number: 16776667.4
(22) Date of filing: 08.04.2016
(51) Int. Cl.: H04J 13/16, H04B 1/04, H04J 11/00, H04L 1/08, H04L 27/01, H04W 52/18, H04W 72/04

(54) **USER TERMINAL, WIRELESS BASE STATION, AND WIRELESS COMMUNICATION METHOD**

(30) Priority: 09.04.2015 JP 2015080321
(71) Applicant: NTT DOCOMO, INC., Chiyoda-ku Tokyo 100-6150 (JP)
(72) Inventor: TAKEDA, Kazuaki, Tokyo 100-6150 (JP); TAKEDA, Kazuki, Tokyo 100-6150 (JP); YASUKAWA, Shimpei, Tokyo 100-6150 (JP); NAGATA, Satoshi, Tokyo 100-6150 (JP)
(74) Representative: Hoffmann Eitle
(86) International application number: PCT/JP2016/061494
(87) International publication number: WO 2016/163501

(57) **Abstract**

The present invention is designed to reduce the decrease of spectral efficiency even when repetitious transmission is applied to communication by user terminals, in which the band to use is limited to a partial narrow band in a system band. According to one aspect of the present invention, a user terminal, in which the band to use is limited to partial narrow bands in a system band, has a receiving section that receives information related to spreading codes, a generation section that generates uplink signals, and a transmission section that repeats transmitting uplink signals in a plurality of subframes, and the generation section applies a predetermined spreading code to an uplink signal that is transmitted in part or all of the plurality of subframes, based on the information related to spreading codes.

## Description

### Technical Field

The present invention relates to a user terminal, a radio base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Also, successor systems of LTE (also referred to as, for example, "LTE-advanced" (hereinafter referred to as "LTE-A"), "FRA" (Future Radio Access) and so on) are under study for the purpose of achieving further broadbandization and increased speed beyond LTE.

Now, accompanying the cost reduction of communication devices in recent years, active development is in progress in the field of technology related to machine-to-machine communication (M2M) to implement automatic control of network-connected devices and allow these devices to communicate with each other without involving people. In particular, of all M2M, 3GPP (3rd Generation Partnership Project) is promoting standardization with respect to the optimization of MTC (Machine-Type Communication), as a cellular system for machine-to-machine communication (see non-patent literature 2). MTC terminals (MTC UE (User Equipment)) are being studied for use in a wide range of fields, such as, for example, electric meters, gas meters, vending machines, vehicles and other industrial equipment.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"
Non-Patent Literature 2: 3GPP TR 36.888 "Study on provision of low-cost Machine-Type Communications (MTC) User Equipments (UEs) based on LTE (Release 12)"

### Summary of Invention

### Technical Problem

From the perspective of reducing the cost and improving the coverage area in cellular systems, amongst all MTC terminals, low-cost MTC terminals (LC-MTC UEs) that can be implemented in simple hardware structures have been increasing in demand. Low-cost MTC terminals can be implemented by limiting the uplink (UL) band and the downlink (DL) band to use to part of a system band. A system band is equivalent to, for example, an existing LTE band (for example, 20 MHz), a component carrier (CC) and so on.

Furthermore, a study is in progress to apply coverage enhancement to MTC terminals. To be more specific, it may be possible to apply, as a method of coverage enhancement, repetitious transmission (repetition), which improves the received-signal-to-interference/noise ratio (SINR: Signal-to-Interference plus Noise Ratio) by repeating transmitting the same signal over multiple subframes in the downlink (DL) and/or the uplink (UL).

However, there is the problem that, if simply repetitious transmission is used, the spectral efficiency, the communication system's capacity (the number of UEs multiplexed) and/or the like may be damaged.

The present invention has been made in view of the above, and it is therefore an object of the present invention to provide a user terminal, a radio base station and a radio communication method that can reduce the decrease of spectral efficiency even when repetitious transmission is applied to communication by user terminals, in which the band to use is limited to a partial narrow band in a system band.

### Solution to Problem

According to one aspect of the present invention, a user terminal, in which the band to use is limited to a partial narrow band in a system band, has a receiving section that receives information related to spreading codes, a generation section that generates uplink signals, and a transmission section that repeats transmitting uplink signals in a plurality of subframes, and, in this user terminal, the generation section applies a predetermined spreading code to an uplink signal that is transmitted in part or all of the plurality of subframes, based on the information related to spreading codes.

### Advantageous Effects of Invention

According to the present invention, it is possible to reduce the decrease of spectral efficiency even when repetitious transmission is applied to communication by user terminals, in which the band to use is limited to a partial narrow band in a system band.

### Brief Description of Drawings

FIG. 1 is a diagram to show an example of the arrangement of narrow bands in a system band;
FIG. 2 is a diagram to show an example of a subframe structure for when repetitious transmission is used;
FIG. 3 is a diagram to show examples of OVSF codes;
FIGs. 4 provide diagrams to show examples of transmission signals when repetitious transmission and CDM are combined;
FIG. 5 is a diagram to show an example of information related to spreading codes;
FIG. 6 is a diagram to show another example of information related to spreading codes;
FIG. 7 is a diagram to show an example of association between fields included in DCI in existing systems and information related to spreading codes;
FIGs. 8 provide diagrams to show examples of transmission power control for uplink signals to which CDM is applied;
FIG. 9 is a diagram to show a schematic structure of a radio communication system according to an embodiment of the present invention;
FIG. 10 is a diagram to show an example of an overall structure of a radio base station according to an embodiment of the present invention;
FIG. 11 is a diagram to show an example of a functional structure of a radio base station according to one embodiment of the present invention;
FIG. 12 is a diagram to show an example of an overall structure of a user terminal according to an embodiment of the present invention; and
FIG. 13 is a diagram to show an example of a functional structure of a user terminal according to an embodiment of the present invention.

### Description of Embodiments

Studies are in progress to simplify the hardware structures of low-cost MTC terminals at the risk of lowering their processing capabilities. For example, studies are in progress to lower the peak rate low, limit the transport block size, limit the resource blocks (also referred to as "RBs," "PRBs" (Physical Resource Blocks), and so on), and limit the RFs to receive, and so on, in low-cost MTC terminals, in comparison to existing user terminals (LTE terminals).

Low-cost MTC terminals may be referred to simply as "MTC terminals." Also, existing user terminals may be referred to as "normal UEs," "non-MTC UEs," and so on.

Unlike existing user terminals, in which the system band (for example, 20 MHz, one component carrier, etc.) is configured as the upper limit band for use, the upper limit band for use for MTC terminals is limited to a predetermined narrow band (for example, 1.4 MHz). Studies are in progress to operate such band-limited MTC terminals in LTE/LTE-A system bands, considering the relationship with existing user terminals.

For example, LTE/LTE-A system bands support frequency-multiplexing of band-limited MTC terminals and band-unlimited existing user terminals. Consequently, MTC terminals may be seen as terminals in which the maximum band to be supported is partial narrow bands in system bands, or may be seen as terminals which have the functions for transmitting/receiving in narrower bands than LTE/LTE-A system bands.

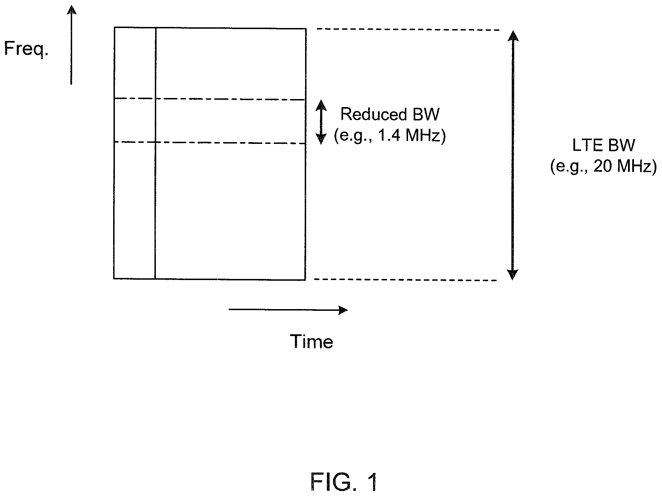

FIG. 1 is a diagram to show an example of the arrangement of narrow bands in a system band. In FIG. 1, a predetermined narrow band (for example, 1.4 MHz), which is narrower than an LTE system band (for example, 20 MHz), is configured in a portion of a system band. This narrow band is a frequency band that can be detected by MTC terminals.

Note that it is preferable to employ a structure, in which the frequency location of the narrow band, which serves as a band for use by MTC terminals, can be changed within the system band. For example, MTC terminals should preferably communicate by using different frequency resources per predetermined period (for example, per subframe). By this means, it is possible to achieve traffic offloading for MTC terminals, achieve a frequency diversity effect, and reduce the decrease of spectral efficiency. Consequently, considering the application to frequency hopping, frequency scheduling and so on, MTC terminals should preferably have an RF re-tuning function.

Now, a study is in progress to apply coverage enhancement to wireless communication by MTC terminals. For example, for MTC terminals, coverage enhancement of maximum 15 dB is under study, in comparison to existing user terminals.

As for the method of coverage enhancement in wireless communication by MTC terminals, the method of repeating transmitting the same signal (transport block) in the downlink (DL) and/or the uplink (UL) may be employed (repetition). However, depending on the environment in which communication takes place, the number of times to repeat transmission (the number of repetitions) to achieve desired coverage performance (for example, coverage of maximum 15 dB) increases, and therefore the spectral efficiency might decrease.

Note that a radio base station can report information about the number of times to repeat uplink signals (for example, the PUSCH (Physical Uplink Shared Channel)) and/or downlink signals (for example, the PDSCH (Physical Downlink Shared Channel)) to MTC terminals by using one of broadcast information (the MIB (Master Information Block)), system information (SIBs (System Information Blocks)), higher layer signaling (for example, RRC signaling) and downlink control information (DCI).

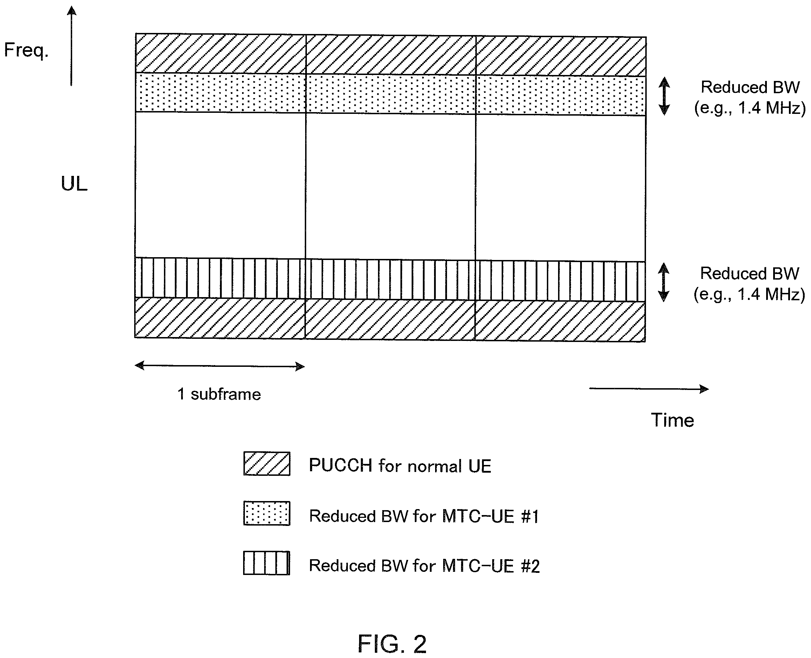

FIG. 2 is a diagram to show an example of a subframe structure for when repetitious transmission is used. As shown in FIG. 2, it is possible to exert control so that different narrow bands (1.4 MHz) are allocated on a per UE basis. However, once the resources where narrow bands can be allocated run out, it is no longer possible to multiplex UEs, and therefore it is not possible, fundamentally, to improve the number of UEs to be multiplexed.

So, in order to achieve increased capacity, a study is in progress to apply CDM (Code Division Multiplexing) to signals that are subject to repetitious transmission. To be more specific, signals that each UE transmits and/or receives are multiplexed on the same resources (time/frequency resources) over a plurality of subframes. Furthermore, these signals are applied (multiplied by) different spreading codes that correspond to each UE. The transmitting end (for example, a UE) multiplies the signals to transmit in repetitions by spreading code elements in subframe units, and transmits the resulting signals.

The receiving end (for example, a radio base station) performs signal receiving processes (for example, demapping, demodulation, decoding and so on) in accordance with each UE's spreading code. For example, a radio base station despreads a plurality of subframes of signals that are received, by using despreading codes that correspond to each UE's spreading code, and decodes the transmission signal from each UE.

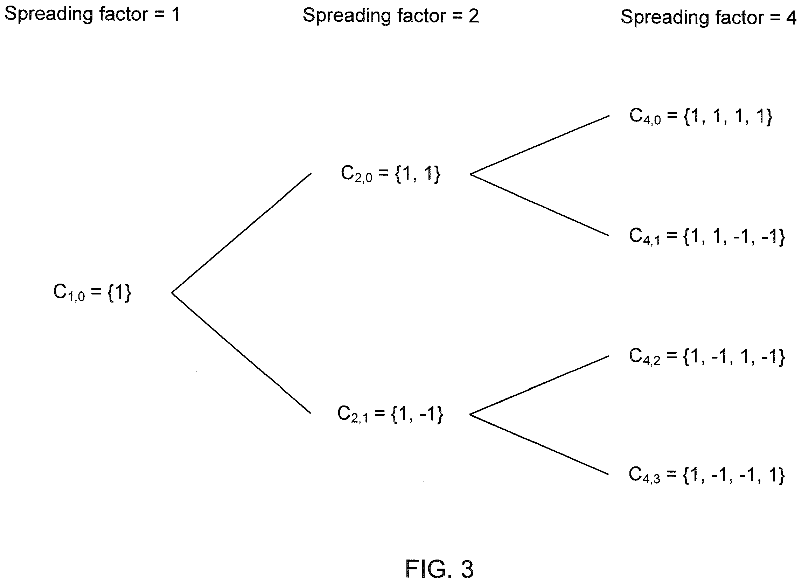

In CDM, for example, OVSF (Orthogonal Variable Spreading Factor) codes are used as spreading codes. FIG. 3 is a diagram to show examples of OVSF codes. In FIG. 3, OVSF codes having the spreading factors of 1, 2 and 4 are shown. Note that an OVSF code (for example, {+1, +1}) may be referred to as an OVSF code set, and, in this case, it is equally possible to call every individual element (for example, "+1") of the OVSF code an OVSF code.

Having a tree-structure such as the one shown in FIG. 3, a given OVSF code has a characteristic of being orthogonal to codes other than the codes that are present on the path from the root up to the OVSF code. Note that spreading factors other than those shown in FIG. 3 may be used as well (for example, 8, 16, and so on).

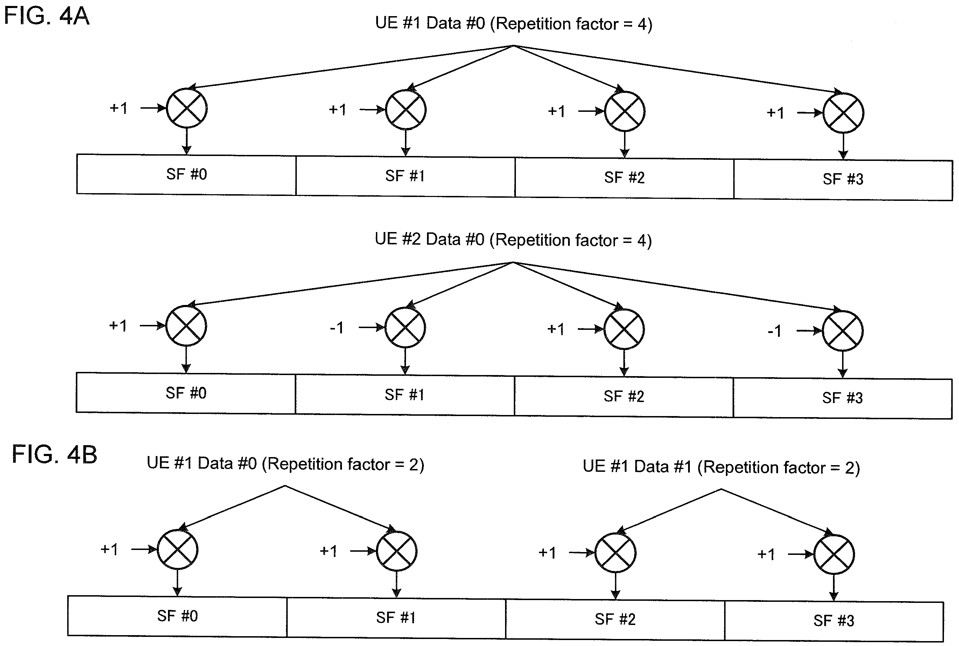

FIGs. 4 provide diagrams to show examples of transmission signals when repetitious transmission and CDM are combined. FIG. 4A shows an example of CDM, applied to two user terminals (UE #1 and UE #2), where the number of repetitions ("repetition factor") is 4.

In FIG. 4A, code C_{4,0} is applied to the data signals (data #0) of UE #1 that are transmitted in subframes (SFs) #0 to #3. Likewise, code C_{4,2} is applied to the data signals (data #0) of UE #2 that are transmitted in SFs #0 to #3. The radio base station multiplies the signals received in each SF by the corresponding elements of code C_{4,0}, and performs the receiving processes of UE #1's signals. Also, the radio base station multiplies the signals received in each SF by the corresponding elements of code C_{4,2}, and performs the receiving processes of UE #2's signal.

FIG. 4B shows an example of CDM, applied to UE #1, where the repetition factor is 2. In FIG. 4B, code C_{2,0} is applied to the data signals of UE #1 that are transmitted in SFs #0 and #1. Also, code C_{2,0} is applied to the data signals of UE #1 that are transmitted in SFs #2 and #3.

Note that, although FIGs. 4 show examples in which the repetition factor and the spreading factor are the same, these may vary as well. That is, part of the subframes over which a signal is repeated may be multiplied by a given spreading code, all of the subframes over which the signal is repeated may be multiplied by the spreading code. Also, different repetition factors (and/or different spreading factors) may be applied between a plurality of UEs. For example, it is possible to apply the CDM pattern of FIG. 4B to UE #1 and apply the CDM pattern of FIG. 4A to UE #2, and execute multiplexing. Also, spreading codes apart from OVSF codes may be used as well.

As for the mode of operation of low-cost MTC terminals, generally, an environment in which MTC terminals do not move or move only slowly is presumed. Consequently, even when CDM is applied to repeated signals, the orthogonality between CDM codes is not lost easily. Consequently, it is possible to achieve increased capacity without damaging the receiving characteristics.

However, how the spreading codes to apply to repeated signals should be reported to MTC terminals whose performance is significantly limited has not been studied heretofore. For example, while it may be possible to simply set forth and use new signals, this is not favorable because, in this case, the overhead of communication increases. Consequently, there is a threat that, when repetitious transmission is employed, CDM cannot be used efficiently, and there is no way of reducing the decrease of spectral efficiency.

So, the present inventors have focused on the characteristics of MTC terminals, and come up with the idea of reporting information related to spreading codes by removing and/or re-using information that is unnecessary to MTC terminals. According to one embodiment of the present invention, a radio base station can report information that is required when using CDM, to MTC terminals, without increasing the overhead. By this means, it is possible to implement coverage enhancement, and, furthermore, achieve increased capacity by means of CDM.

Now, an embodiment of the present invention will be described below in detail. Although MTC terminals will be shown as an example of user terminals in which the band to use is limited to narrow bands, the application of the present invention is not limited to MTC terminals. Furthermore, although 6-PRB (1.4-MHz) narrow bands will be described below, the present invention can be applied to other narrow bands as well, based on the present description.

Also, although examples will be shown in the following description where CDM is applied to uplink signals (for example, the PUSCH) that are transmitted from MTC terminals to radio base stations, it is equally possible to apply CDM to downlink signals (for example, the PDSCH) that are transmitted from radio base station to MTC terminals. Also, according to the present invention, the signals (channels) to which CDM can be applied are not limited to data signals (the PDSCH, the PUSCH, etc.), and control signals (for example, the EPDCCH (Enhanced Physical Downlink Control Channel)) and reference signals (for example, the CSI-RS (Channel State Information Reference Signal), the CRS (Cell-specific Reference Signal), the DMRS (Demodulation Reference Signal), the SRS (Sounding Reference Signal)) and others are equally applicable.

### (Method of reporting information related to spreading codes)

According to one embodiment of the present invention, a radio base station (eNB) reports information related to spreading codes to MTC terminals (UEs). The information related to spreading codes is explicitly reported by using downlink control information (DCI), higher layer signaling (for example, RRC signaling, MAC signaling, broadcast information (for example, SIBs)) and so on.

The information related to spreading codes may include information that indicates whether or not spreading codes are applied, information that specifies the spreading codes applied to signals, and so on. Also, in the information related to spreading codes, indices that are linked with spreading codes may be reported.

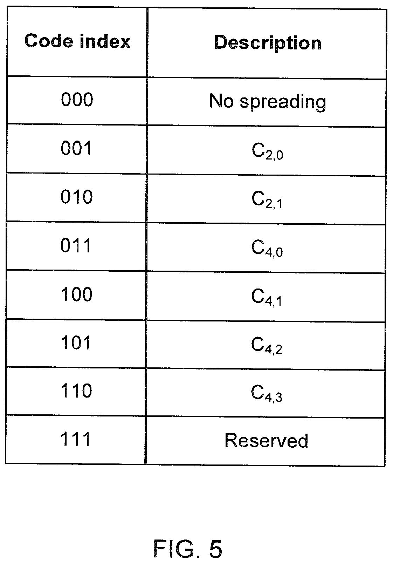

FIG. 5 is a diagram to show an example of the information related to spreading codes. In FIG. 5, spreading codes are specified by 3-bit indices (code indices). Here, the indices should preferably be configured to be able to indicate that no spreading code is applied ("No spreading"), and to indicate codes of different spreading factors.

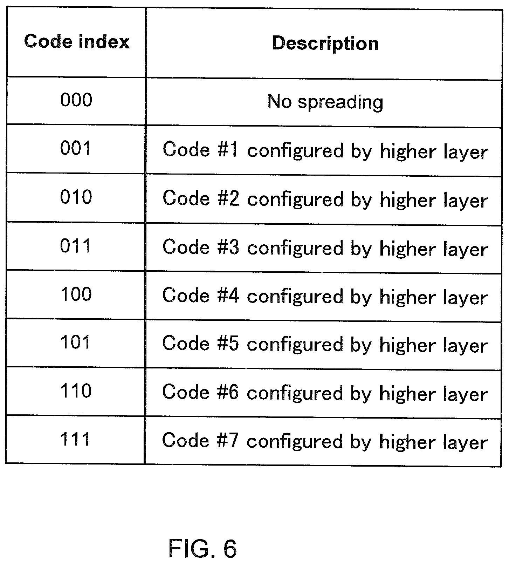

FIG. 6 is a diagram to show another example of the information related to spreading codes. In FIG. 6, the codes corresponding to the indices 001 to 111 can be each configured by higher layer signaling (RRC signaling and so on). That is, information to show the associations (links) between spreading codes and indices may be reported. By this means, even when the repetition factor and the spreading factor change, it is still possible to apply CDM in a flexible manner.

Note that the number of indices associated with spreading codes is not limited 8 as shown in FIG. 5, and, for example, 16 or 32 indices can be configured. Also, a UE may have a plurality of tables in which spreading codes and indices are associated, and switch between these multiple tables in accordance with predetermined signaling (for example, DCI).

When the information related to spreading codes is placed in DCI, a new bit field may be introduced, or the information may be reported by way of re-interpreting an existing bit field. Existing bit fields such as the resource allocation (RA) field, the MCS (Modulation and Coding Scheme) field, or the field related to cyclic shift and orthogonal cover code (cyclic shift for DM RS and OCC index field) can be used. Note that other fields can be re-interpreted and used as well.

In MTC terminals, the RA field has only to specify a predetermined narrow band (for example, 6 RBs) of resources, and there the number of bits can be reduced in comparison to the RA field of existing systems. Consequently, it is possible to use part or all of the RA field of existing systems as information related to spreading codes.

Also, when coverage enhancement mode is used in MTC terminals (when signals are transmitted in repetitions), part of the MCSs in existing systems (for example, relatively high MCSs) may not be selected. Consequently, it is possible to use part or all of the MCS field of existing systems as information related to spreading codes.

Furthermore, when CDM is employed in MTC terminals in coverage enhancement mode, given that CDM makes signals orthogonal between user terminals, it is possible not to apply other orthogonalization schemes such as cyclic shift and orthogonal cover codes to reference signals (for example, the DMRS). Consequently, it is possible to use part or all of the field related to cyclic shift and orthogonal cover codes used in existing systems as information related to spreading codes. This field is included in, for example, DCI format 0 or 4.

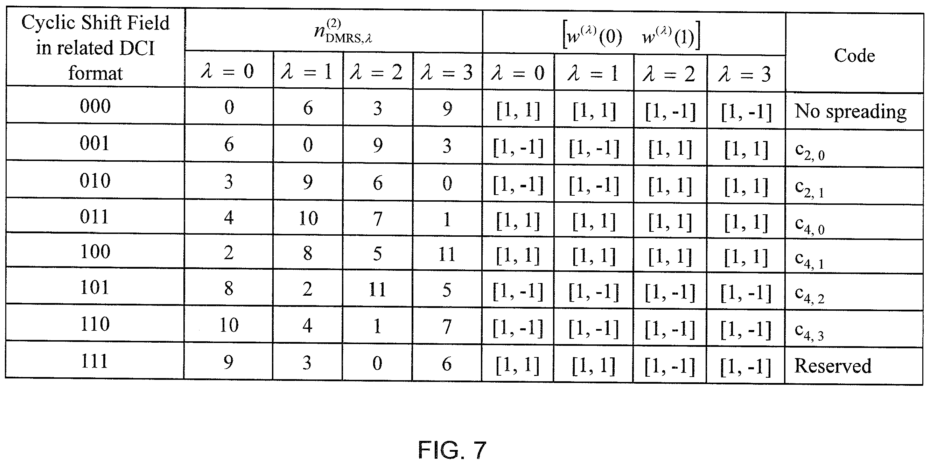

FIG. 7 is a diagram to show an example of association between fields included in the DCI of existing systems and information related to spreading codes. In FIG. 7, the field related to cyclic shift and orthogonal cover codes used in existing systems is used as the code index, as shown in FIG. 5 and FIG. 6. In this case, the cyclic shift and/or orthogonal cover codes to apply to reference signals may be configured with predetermined fixed values, or may be placed and configured in conventional associations, as shown in FIG. 7.

Note that information as to whether or not to place the information related to spreading codes in DCI, and/or information as to which bit field is used as the information related to spreading codes may be reported via higher layer signaling (for example, RRC signaling, MAC signaling, broadcast information, etc.).

As described above, by using the method of reporting information related to spreading codes according to the present invention, information that is required when using CDM can be reported to user terminals adequately. For example, it is possible to report information related to spreading codes by using bit fields provided in the DCI of existing systems (up to LTE Rel. 12). By employing this configuration, it is possible to reduce the increase of overhead due to the information that is required when applying CDM to repeated signals. Also, it is possible to implement coverage enhancement, and, furthermore, achieve increased capacity by means of CDM.

Note that, in another embodiment of the present invention, the information related to spreading codes may be reported in an implicit manner. For example, it is possible to link the information related to spreading codes with narrow band hopping patterns (scheduling patterns), repetition factors, UE IDs (UE Identifiers), subframe numbers and so on, and acquire the information related to spreading codes based on these pieces of information.

### (Variations)

Now, variations (preferable examples) of the method of applying CDM to repeated signals will be described below. To be more specific, the structure of signals, the power control method and so on will be described.

When signals are transmitted by applying the same spreading code, these signals are transmitted carrying the same information. In other words, the same information is mapped to a plurality of subframes, and these subframes are multiplied by a spreading code. For example, as shown in FIG. 4, UE #1 is controlled to place the same data -- data #0 -- in the signals to transmit in SFs #0 to #3, to which the spreading code {+1, +1, +1, +1} is applied. This is because the orthogonality of CDM may be lost if CDM is applied to signals that contain varying information.

The same information may be, for example, a MAC CE (Medium Access Control Control Element) such as a PHR (Power Headroom Report), UCI (Uplink Control Information) and so on.

Also, when signals (for example, the PUSCH) that are generated by performing a scrambling process are transmitted by applying the same spreading code, the same scrambling sequence is applied to the scrambling process of these signals. This is because the orthogonality of CDM may be lost if the signals to which CDM is applied are generated by using varying scrambling sequences.

Even when signals that are generated by performing a scrambling process are transmitted by applying the same spreading code, it is still possible to apply varying scrambling sequences to these signals. In this case, it is possible to maintain a signal orthogonal to other user terminals' transmission signals by applying a different orthogonalization method to this signal, including cyclic shift, orthogonal cover code, and so on.

Also, it is equally possible to employ a structure in which the same spreading code is applied to varying types of signals (data signals, control signals, reference signals, etc.). For example, the same spreading code may be applied to the PUSCH (data signal) and the DMRS (reference signal) transmitted in the same subframe. Note that the SRS may or may not be multiplied by a spreading code.

When a UE transmits signals (for example, the PUSCH), to which CDM is applied, it is preferable to transmit all the signals of the same spreading code with the transmission power at the beginning of the transmission. In other words, transmission should preferably be carried out with the same transmission power while the same spreading code is used. This is because signals to which the same spreading code is applied can maintain the orthogonality of CDM, and should preferably be received with the same received power. If the power of signals that use the same spreading code (spreading code set) changes in the middle of transmission, the orthogonality of CDM is lost, and interference against other users may be produced.

Consequently, it may be possible to employ a structure in which transmission power is not changed while signals using the same spreading code are transmitted in repetitions. For example, if a UE receives a TPC command while repeating transmitting a signal using a given spreading code, the UE may be controlled not to follow (that is, to disregard) the TPC command, follow the TPC command when switching to the next spreading code, or follow the TPC command when starting to transmit the next signal in repetitions.

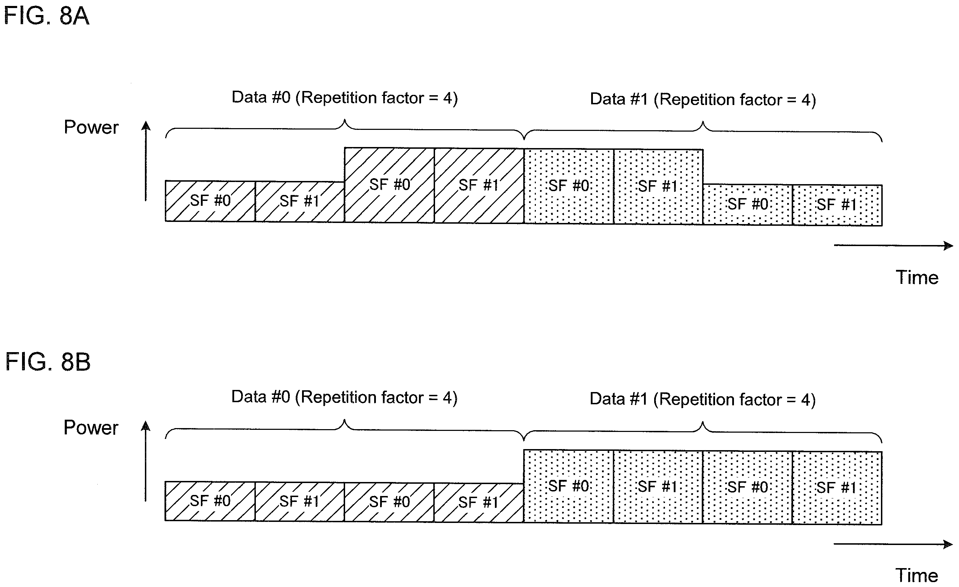

FIGs. 8 provide diagrams to show examples of transmission power control for uplink signals to which CDM is applied. FIGs. 8 show the transmission power of each subframe, in schematic representations, where the repetition factor = 4 and the spreading factor = 2 are configured.

FIG. 8A shows an example of a case where TPCs are issued at timings the spreading code is switched. In this example, the same transmission power is kept within a set of SFs #0 and #1, where the same spreading code is used. For example, if the UE receives a TPC command in first SF #0, the UE changes the transmission power based on this TPC command in next SF #0 (the timing the next code starts being applied), not in this SF.

FIG. 8B shows an example of a case where a TPC issued at the timing the information to transmit in repeated signals is switched. In this example, the same transmission power is maintained throughout SFs in which the same information (for example, data #0) is transmitted. For example, if a UE receives a TPC command while transmitting data #0, the UE changes the transmission power based on this TPC command at or after the timing to start transmitting the next information (data #1), not while transmitting the current information.

It may also possible to apply frequency hopping to transmission signals. For example, it is possible to apply frequency hopping to use resources of a plurality of narrow bands, frequency hopping to use resources within a predetermined narrow band, and so on. When frequency hopping is applied to transmission signals, a structure may be employed in which the transmission power is not changed (for example, TPC commands are not issued) while hopping is in progress. Here, if frequency hopping is applied to transmission signals, a structure may be employed in which the transmission power is not changed whether or not CDM is applied to the transmission signals.

Also, control may be exerted so that, when a predetermined control signal is received during repetitious transmission, the process to follow this control signal is not carried out (the control signal is disregarded) or the process is carried out after the repetitious transmission is finished (the process is delayed). For example, when a UE receives a UL grant during repetitious transmission, the UE may carry out the uplink transmission based on the UL grant with the next repeated signal. A structure may be employed here in which this timing control is made regardless of whether or not CDM is applied to transmission signals.

As described above, according to the structures of variations of the present invention, it is possible to adequately establish orthogonality between UEs by means of CDM, even when CDM is applied to repeated signals. For example, it is possible to implement transmission power control while reducing the damage on the orthogonality of CDM.

### (Radio Communication System)

Now, the structure of the radio communication system according to an embodiment of the present invention will be described below. In this radio communication system, the radio communication methods according to the above-described embodiments of the present invention are employed. Note that the radio communication methods of the above-described embodiments may be applied individually or may be applied in combination. Here, although MTC terminals will be shown as examples of user terminals in which the band to use is limited to narrow bands, the present invention is by no means limited to MTC terminals.

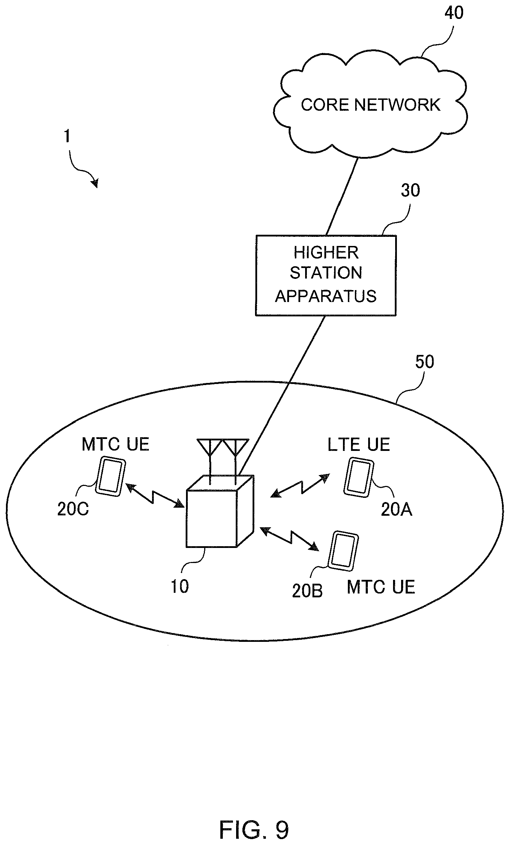

FIG. 9 is a diagram to show a schematic structure of the radio communication system according to an embodiment of the present invention. The radio communication system 1 shown in FIG. 9 is an example of employing an LTE system in the network domain of a machine communication system. The radio communication system 1 can adopt carrier aggregation (CA) and/or dual connectivity (DC) to group a plurality of fundamental frequency blocks (component carriers) into one, where the LTE system bandwidth constitutes one unit. Also, although, in this LTE system, the system band is configured to maximum 20 MHz in both the downlink and the uplink, this configuration is by no means limiting. Note that the radio communication system 1 may be referred to as "SUPER 3G," "LTE-A" (LTE-Advanced), "IMT-Advanced," "4G," "5G," "FRA" (Future Radio Access) and so on.

The radio communication system 1 is comprised of a radio base station 10 and a plurality of user terminals 20A, 20B and 20C that are connected with the radio base station 10. The radio base station 10 is connected with a higher station apparatus 30, and connected with a core network 40 via the higher station apparatus 30. Note that the higher station apparatus 30 may be, for example, an access gateway apparatus, a radio network controller (RNC), a mobility management entity (MME) and so on, but is by no means limited to these.

A plurality of user terminal 20A, 20B and 20C can communicate with the radio base station 10 in a cell 50. For example, the user terminal 20A is a user terminal that supports LTE (up to Rel-10) or LTE-Advanced (including Rel-10 and later versions) (hereinafter referred to as an "LTE terminal"), and the other user terminals 20B and 20C are MTC terminals that serve as communication devices in machine communication systems. Hereinafter the user terminals 20A, 20B and 20C will be simply referred to as "user terminals 20," unless specified otherwise.

Note that the MTC terminals 20B and 20C are terminals that support various communication schemes including LTE and LTE-A, and are by no means limited to stationary communication terminals such electric meters, gas meters, vending machines and so on, and can be mobile communication terminals such as vehicles. Furthermore, the user terminals 20 may communicate with other user terminals directly, or communicate with other user terminals via the radio base station 10.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH is frequency-division-multiplexed with the PDSCH and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, downlink radio quality information (CQI: Channel Quality Indicator), delivery acknowledgement signals and so on are communicated by the PUCCH. By means of the PRACH, random access preambles for establishing connections with cells are communicated.

### <Radio base station>

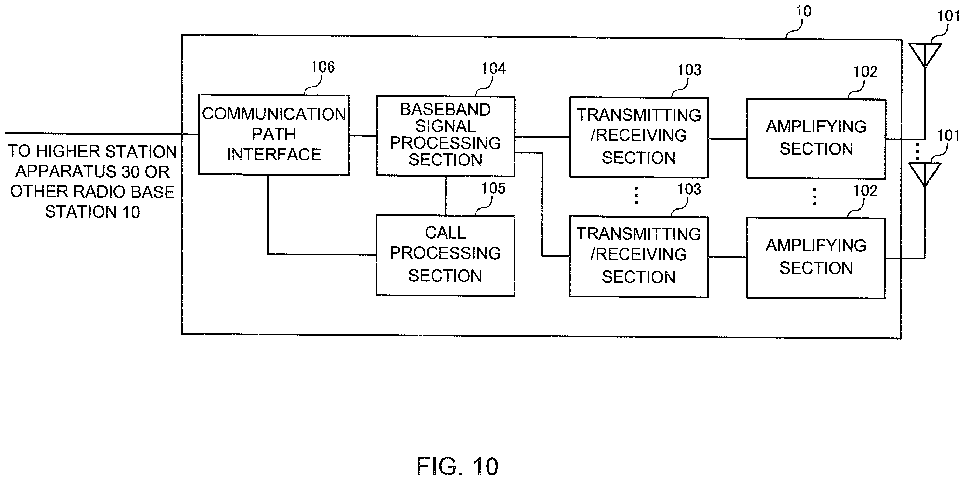

FIG. 10 is a diagram to show an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as an RLC retransmission control transmission process, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts baseband signals that are pre-coded and output from the baseband signal processing section 104 on a per antenna basis, into a radio frequency band. The transmitting/receiving sections 103 can be constituted by transmitters/receivers, transmitting/receiving circuits or transmitting/receiving devices that can be described based on common understanding of the technical field to which the present invention pertains. Note that a transmitting/receiving section 103 may be structured as a transmitting/receiving section in one entity, or may be constituted by a transmitting section and a receiving section.

The radio frequency signals having been subjected to frequency conversion in the transmitting/receiving sections 103 are amplified in the amplifying sections 102, and transmitted from the transmitting/receiving antennas 101. The transmitting/receiving sections 103 can transmit and/or receive various signals in a narrow bandwidth (for example, 1.4 MHz) that is more limited than a system band (for example, one component carrier).

The transmitting/receiving sections 103 transmits information about spreading codes to a predetermined user terminal 20. The predetermined user terminal 20 is a terminal that repeats transmitting and/or receiving signals carrying the same information, and is a terminal that can apply orthogonalization to these signals by using CDM. For example, the predetermined user terminal 20 is a user terminal 20 in which coverage enhancement is configured.

Meanwhile, as for uplink signals, radio frequency signals that are received in the transmitting/receiving antennas 101 are each amplified in the amplifying sections 102. Each transmitting/receiving section 103 receives uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and/or receive signals (backhaul signaling) with other radio base stations 10 via an inter-base station interface (for example, an interface in compliance with the CPRI (Common Public Radio Interface), such as optical fiber, the X2 interface, etc.).

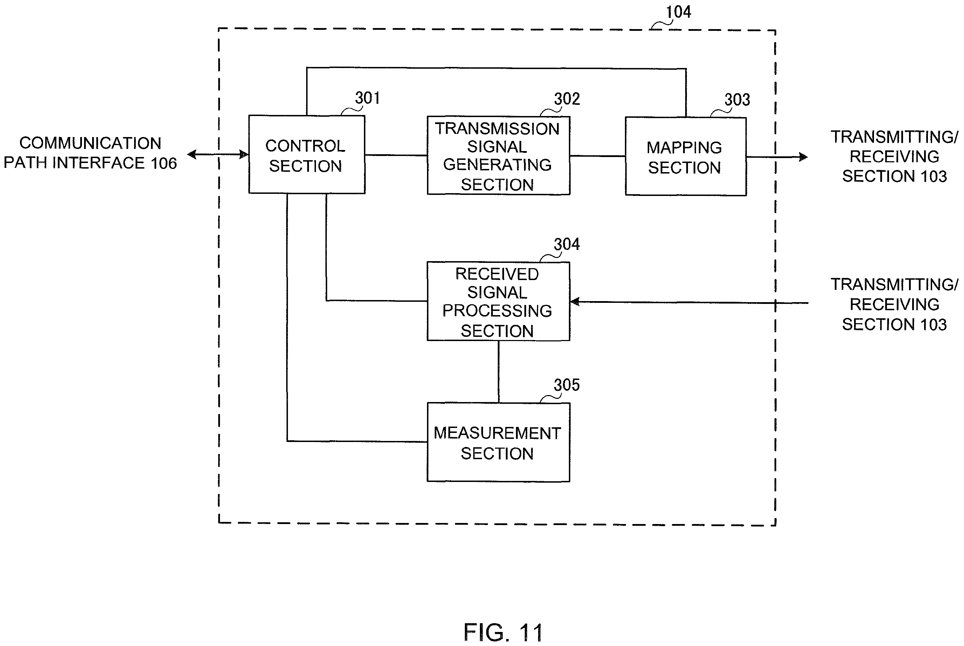

FIG. 11 is a diagram to show an example of a functional structure of a radio base station according to the present embodiment. Note that, although FIG. 11 primarily shows functional blocks that pertain to characteristic parts of the present embodiment, the radio base station 10 has other functional blocks that are necessary for radio communication as well. As shown in FIG. 11, the baseband signal processing section 104 has a control section (scheduler) 301, a transmission signal generating section (generating section) 302, a mapping section 303, a received signal processing section 304 and a measurement section 305.

The control section (scheduler) 301 controls the whole of the radio base station 10. The control section 301 can be constituted by a controller, a control circuit or a control device that can be described based on common understanding of the technical field to which the present invention pertains.

The control section 301, for example, controls the generation of signals in the transmission signal generating section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of downlink data signals that are transmitted in the PDSCH and downlink control signals that are communicated in the PDCCH and/or the EPDCCH. Also, the control section 301 controls the scheduling of synchronization signals, and downlink reference signals such as CRSs (Cell-specific Reference Signals), CSI-RSs (Channel State Information Reference Signals), DM-RSs (Demodulation Reference Signals) and so on.

Also, the control section 301 controls the scheduling of uplink data signals transmitted in the PUSCH, uplink control signals transmitted in the PUCCH and/or the PUSCH (for example, delivery acknowledgement signals (HARQ-ACKs)), random access preambles transmitted in the PRACH, uplink reference signals and so on.

The control section 301 controls the transmission signal generating section 302 and the mapping section 303 to allocate various signals to narrow bands and transmit these to the user terminals 20. For example, the control section 301 controls downlink system information (the MIB, SIBs, etc.), EPDCCHs, PDSCHs and so on, to be transmitted in narrow bands.

Note that, when the radio base station 10 employs coverage enhancement, for example, the control section 301 may exert control so that the repetition factor for a downlink signal for a predetermined user terminal 20 is configured, and the downlink signal is transmitted in repetitions according to this repetition factor. Furthermore, the control section 301 may control this repetition factor to be reported to the user terminal 20 in a control signal (DCI) in the EPDCCH or by using higher layer signaling (for example, RRC signaling, broadcast information, etc.).

Furthermore, if the repetition factor for a UL signal (for example, the PUCCH) is configured in the user terminal 20, the control section 301 may exert control so that information about the repetition factor is included in DCI and/or the like, and transmitted to the user terminal 20.

Also, the control section 301 controls (configures) the spreading codes to apply to the transmission signals and/or the received signals of the predetermined user terminal 20. Furthermore, the control section 301 may exert control so that information about the spreading codes is reported to the user terminal 20 in a control signal (DCI) in the EPDCCH or by using higher layer signaling (for example, RRC signaling).

The spreading codes to be configured in the user terminal 20 are OVSF-based codes. The radio base station 10 may determine the spreading codes to configure in a predetermined user terminal 20 based on the number of user terminals 20 that connect with the radio base station 10, traffic, channel states, and so on.

The control section 301 outputs the repetition factor to apply to each user terminal 20, the information related to spreading codes, and so on, to the received signal processing section 304.

The control section 301 may have functions for control the uplink signal transmission power of the user terminals 20. For example, the control section 301 may exert control to report TPC commands based on feedback signals (CSI (Channel State Information) and so on) from the user terminals 20.

The transmission signal generating section (generation section) 302 generates downlink signals based on commands from the control section 301 and outputs these signals to the mapping section 303. The transmission signal generating section 302 can be constituted by a signal generator, a signal generating circuit or a signal generating device that can be described based on common understanding of the technical field to which the present invention pertains.

For example, the transmission signal generating section 302 generates DL assignments, which report downlink signal allocation information, and UL grants, which report uplink signal allocation information, based on commands from the control section 301. Also, the downlink data signals are subjected to a coding process and a modulation process, based on coding rates and modulation schemes that are determined based on channel state information (CSI) from each user terminal 20 and so on.

Also, when repetitious transmission of a downlink signal (for example, repetitious transmission of the PDSCH) is configured, the transmission signal generating section 302 generates the same downlink signal over a plurality of subframes and outputs these signals to the mapping section 303.

The mapping section 303 maps the downlink signals generated in the transmission signal generating section 302 to predetermined narrow band radio resources (for example, maximum 6 resource blocks) based on commands from the control section 301, and outputs these to the transmitting/receiving sections 103. The mapping section 303 can be constituted by a mapper, a mapping circuit or a mapping device that can be described based on common understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, and so on). For the received signal processing section 304, a signal processor, a signal processing circuit or a signal processing device that can be described based on common understanding of the technical field to which the present invention pertains can be used.

The received signal processing section 304 applies receiving processes for repeated signals, to the signals received from the user terminals 20 that carry out repetitious signal transmission. Also, the received signal processing section 304 performs the despreading process of the signals received from the user terminals 20 that employ spreading codes.

The received signal processing section 304 outputs the decoded information acquired through the receiving processes to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or a measurement device that can be described based on common understanding of the technical field to which the present invention pertains.

Also, by using the received signals, the received signal processing section 304 may measure the received power (for example, RSRP (Reference Signal Received Power)), the received quality (for example, RSRQ (Reference Signal Received Quality)), channel states and so on. The measurement results may be output to the control section 301.

### <User terminal>

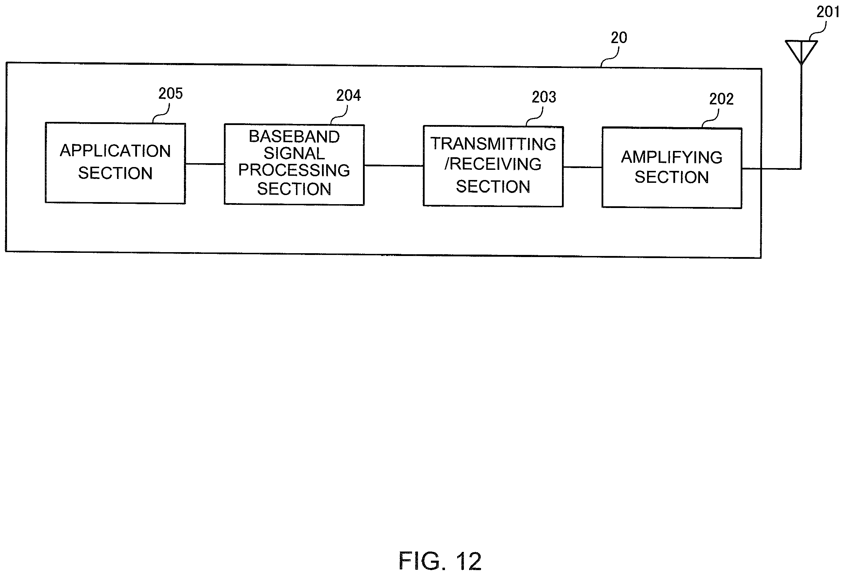

FIG. 12 is a diagram to show an example of an overall structure of a user terminal according to the present embodiment. Note that, although not described in detail herein, normal LTE terminals may operate to act as MTC terminals. A user terminal 20 has a transmitting/receiving antenna 201, an amplifying section 202, a transmitting/receiving section 203, a baseband signal processing section 204 and an application section 205. Also, the user terminal 20 may have a plurality of transmitting/receiving antennas 201, amplifying sections 202, transmitting/receiving sections 203 and/or others.

A radio frequency signal that is received in the transmitting/receiving antenna 201 is amplified in the amplifying section 202. The transmitting/receiving section 203 receives the downlink signal amplified in the amplifying section 202. For example, the transmitting/receiving section 203 receives information about the repetition factor, the spreading code and so on.

The received signal is subjected to frequency conversion and converted into the baseband signal in the transmitting/receiving section 203, and output to the baseband signal processing section 204. The transmitting/receiving section 203 can be constituted by a transmitters/receiver, a transmitting/receiving circuit or a transmitting/receiving device that can be described based on common understanding of the technical field to which the present invention pertains. Note that the transmitting/receiving section 203 may be structured as a transmitting/receiving section in one entity, or may be constituted by a transmitting section and a receiving section.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to the transmitting/receiving section 203. The baseband signal that is output from the baseband signal processing section 204 is converted into a radio frequency bandwidth in the transmitting/receiving section 203. The radio frequency signal that is subjected to frequency conversion in the transmitting/receiving section 203 is amplified in the amplifying section 202, and transmitted from the transmitting/receiving antenna 201.

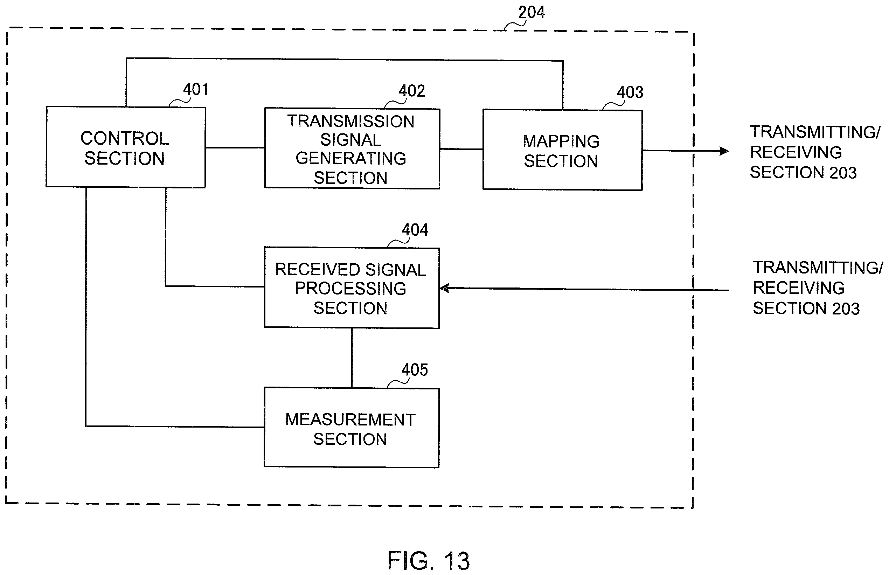

FIG. 13 is a diagram to show an example of a functional structure of a user terminal according to the present embodiment. Note that, although FIG. 13 primarily shows functional blocks that pertain to characteristic parts of the present embodiment, the user terminal 20 has other functional blocks that are necessary for radio communication as well. As shown in FIG. 13, the baseband signal processing section 204 provided in the user terminal 20 has a control section 401, a transmission signal generating section (generation section) 402, a mapping section 403, a received signal processing section 404 and a measurement section 405.

The control section 401 controls the whole of the user terminal 20. The control section 401 can be constituted by a controller, a control circuit or a control device that can be described based on common understanding of the technical field to which the present invention pertains.

The control section 401, for example, controls the generation of signals in the transmission signal generating section 402, the allocation of signals by the mapping section 403, and so on. Furthermore, the control section 401 controls the signal receiving processes in the received signal processing section 404, the measurements of signals in the measurement section 405, and so on.

The control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation of uplink control signals (for example, delivery acknowledgement signals (HARQ-ACKs) and so on) and uplink data signals based on the downlink control signals, the results of deciding whether or not re transmission control is necessary for the downlink data signals, and so on.

Also, if the repetition factor for an uplink signal (for example, the PUCCH, the PUSCH, etc.) is configured in the user terminal 20, the control section 401 exerts control so that signals carrying the same information are transmitted in repetitions over a plurality of subframes, based on repetition factor-related information received from the radio base station 10.

Also, based on information related to spreading codes, the control section 401 controls the transmission signal generating section 402 to apply a predetermined spreading code over part or all of a plurality of subframes in which a predetermined signal is transmitted in repetitions. For example, the control section 401 may have a table that relates to spreading codes, and determines the spreading code to apply to the uplink signal based on the index reported from the radio base station 10 and this table. Also, the control section 401 may output information about the spreading code to the transmission signal generating section 402 and have this spreading code applied to predetermined signals.

Note that, when information about the above table (the associations between spreading codes and indices) is input from the received signal processing section 404, the control section 401 can change the contents of the table based on this information.

The control section 401 controls the uplink signal transmission power of the user terminal 20. The control section 401 may control the transmission power based on TPC commands that are reported from the radio base station 10. Note that the control section 401 may be structured to fix (or not to change) the transmission power of signals, to which the same spreading code is applied, until the transmission is finished. Also, while a predetermined uplink signal is transmitted in repetitions, the control section 401 may be structured to fix (or not to change) the transmission power of this signal until the transmission is complete.

Also, when the repetition factor or a spreading code for a downlink signal is configured, the control section 401 may output information related to the repetition factor and/or the spreading code to the received signal processing section 404 so that the receiving processes are performed based on these information.

The transmission signal generating section 402 generates uplink signals based on commands from the control section 401, and outputs these signals to the mapping section 403. The transmission signal generating section 402 can be constituted by a signal generator, a signal generating circuit or a signal generating device that can be described based on common understanding of the technical field to which the present invention pertains.

For example, the transmission signal generating section 402 generates uplink control signals such as delivery acknowledgement signals (HARQ-ACKs), channel state information (CSI) and so on, based on commands from the control section 401. Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal.

Also, when the user terminal 20 is configured to transmit a predetermined uplink signal in repetitions, the transmission signal generating section 402 generates the same uplink signal over a plurality of subframes, and outputs these signals to the mapping section 403. The repetition factor may be increased and/or decreased based on commands from the control section 401.

Based on information related to spreading codes, the transmission signal generating section 402 may multiply the uplink signal that is transmitted in repetitions by a spreading code over a plurality of subframes.

The transmission signal generating section 402 generates a predetermined signal (for example, the PUSCH) based on a predetermined scrambling sequence. Here, the transmission signal generating section 402 may generate uplink signals, which are transmitted in consecutive subframes and to which the same spreading code is applied, by using the same scrambling sequence.

Also, the transmission signal generating section 402 may apply the same spreading code to the PUSCH and the DMRS. Note that the transmission signal generating section 402 may not apply spreading codes to part of the signals (for example, the SRS).

The mapping section 403 maps the uplink signals generated in the transmission signal generating section 402 to radio resources (maximum 6 resource blocks) based on commands from the control section 401, and outputs these to the transmitting/receiving sections 203. The mapping section 403 can be constituted by a mapper, a mapping circuit or a mapping device that can be described based on common understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or a signal processing device that can be described based on common understanding of the technical field to which the present invention pertains.

The received signal processing section 404 applies receiving processes for repeated signals to signals received from the radio base stations 10 that carry out repetitious signal transmission. Also, the received signal processing section 404 performs the despreading process of the signals received from the radio base stations 10 that employ spreading codes.

The received signal processing section 404 output the decoded information that is acquired through the receiving processes to the control section 401. The received signal processing section 404 outputs, for example, broadcast information, system information, RRC signaling, DCI and so on, to the control section 401. Also, the received signal processing section 404 outputs the received signals, the signals after the receiving processes and so on to the measurement section 405.

The measurement section 405 conducts measurements with respect to the received signals. The measurement section 405 can be constituted by a measurer, a measurement circuit or a measurement device that can be described based on common understanding of the technical field to which the present invention pertains.

The measurement section 405 may measure, for example, the received power (for example, RSRP), the received quality (for example, RSRQ), the channel states and so on of the received signals. The measurement results may be output to the control section 401.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of the radio base station 10 and the user terminal 20 may be implemented by using hardware such as an ASIC (Application-Specific Integrated Circuit), a PLD (Programmable Logic Device), an FPGA (Field Programmable Gate Array) and so on. Also, the radio base stations 10 and user terminals 20 may be implemented with a computer device that includes a processor (CPU), a communication interface for connecting with networks, a memory and a computer-readable storage medium that holds programs. That is, the radio base stations and user terminals according to an embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM (Read Only Memory), an EPROM (Erasable Programmable ROM), a CD-ROM (Compact Disc-ROM), a RAM (Random Access Memory), a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Now, although the present invention has been described in detail above, it should be obvious to a person skilled in the art that the present invention is by no means limited to the embodiments described herein. For example, the above-described embodiments may be used individually or in combinations. The present invention can be implemented with various corrections and in various modifications, without departing from the spirit and scope of the present invention defined by the recitations of claims. Consequently, the description herein is provided only for the purpose of explaining example s, and should by no means be construed to limit the present invention in any way.

The disclosure of Japanese Patent Application No. 2015-080321, filed on April 9, 2015, including the specification, drawings and abstract, is incorporated herein by reference in its entirety.

## Claims

1. A user terminal, in which a band to use is limited to a partial narrow band in a system band, the user terminal comprising:
a receiving section that receives information related to spreading codes;
a generation section that generates uplink signals; and
a transmission section that repeats transmitting uplink signals in a plurality of subframes,
the generation section applies a predetermined spreading code to an uplink signal that is transmitted in part or all of the plurality of subframes, based on the information related to spreading codes.

2. The user terminal according to claim 1, wherein the information related to spreading codes is part or all of a predetermined field of downlink control signal (DCI: Downlink Control Information) set forth in existing systems.

3. The user terminal according to claim 2, wherein the predetermined field includes one of a resource allocation field, an MCS (Modulation and Coding Scheme) field and a field related to cyclic shift and orthogonal cover code (cyclic shift for DM RS and OCC index field).

4. The user terminal according to one of claim 1 to claim 3, wherein:
the information related to spreading codes includes indices that are associated with spreading codes; and
the receiving section further receives information about the associations between the indices and the spreading codes via higher layer signaling.

5. The user terminal according to one of claim 1 to claim 4, further comprising a control section that controls transmission power of uplink signals,
wherein the control section controls the transmission power to be fixed in subframes to which a same spreading code is applied.

6. The user terminal according to claim 5, wherein the control section controls the transmission power to be fixed in the plurality of subframes in which the uplink signals are transmitted in repetitions.

7. The user terminal according to one of claim 1 to claim 6, wherein the generation section generates uplink signals to transmit in subframes to which a same spreading code is applied, by using a same scrambling sequence.

8. The user terminal according to one of claim 1 to claim 7, wherein the generation section applies a same spreading code to a PUSCH (Physical Uplink Shared Channel) and a DMRS (Demodulation Reference Signal).

9. A radio base station that communicates with a user terminal, in which a band to use is limited to a partial narrow band in a system band, the radio base station comprising:
a generation section that generates information related to spreading codes;
a transmission section that transmits the information related to spreading codes to the user terminal; and
a received signal processing section that performs a receiving process of an uplink signal that is transmitted from the user terminal in repetitions in a plurality of subframes, based on the information related to spreading codes.

10. A radio communication method to allow a user terminal, in which a band to use is limited to a partial narrow band in a system band, and a radio base station to communicate, the radio communication method comprising, in the user terminal, the steps of:
receiving information related to spreading codes;
generating uplink signals;
repeating transmitting uplink signals in a plurality of subframes; and
applying a predetermined spreading code to an uplink signal that is transmitted in part or all of the plurality of subframes, based on the information related to spreading codes.
